Europäisches Patentamt

European Patent Office

Office européen des brevets

(19)

(11) Publication number: **0 143 358**
**A2**

(12) **EUROPEAN PATENT APPLICATION**

(21) Application number: **84113143.6**

(22) Date of filing: **31.10.84**

(51) Int. Cl.⁴: **G 05 D 23/19**

(30) Priority: **01.11.83 FI 834014**

(43) Date of publication of application: **05.06.85**
**Bulletin 85/23**

(84) Designated Contracting States: **AT BE CH DE FR GB IT LI LU NL SE**

(71) Applicant: **RAKENNUSVALMISTE OY,**
**SF-30420 Forssa 42 (FI)**

(72) Inventor: **Hämäläinen, Ilkka, Hämeentie 6 A,**
**SF-00530 Helsinki (FI)**
Inventor: **Kainulainen, Osmo, Hämeentie 6 A,**
**SF-00530 Helsinki (FI)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath,**
**Maximilianstrasse 58, D-8000 München 22 (DE)**

(54) **A regulating method and equipment for its realisation.**

(57) A method of regulation related to the heating of room space for governing the heating effect of electrical heating equipment (1), the purpose being to introduce a regulation method which operates more accurately than by previous methods and in particular at lower surface temperatures. According to the invention the heating effect (P) of the heating equipment (1) is governed in accordance with the room temperature ($T_h$) and time (t) so that upon the room temperature falling below the corresponding temperature setting value ($T_a$) which is being maintained, the surface temperature ($T_p$) of the heating equipment is raised by a correspondingly calculated known value ($\triangle T_1$) for a known time period ($\triangle t$), the regulation cycle being thereafter repeated.

A REGULATING METHOD AND EQUIPMENT FOR ITS REALISATION

The subject of the invention is a method of regulation for governing electrical heating equipment in relation with the heating of room space. A further subject of the invention is equipment for the realisation of the method

It is intended that the electrical heating equipment in connection with this application mainly consists of electrical heating equipment located in the room space in direct association with the room air, essentially wall-mounted heating radiators or simmilar equipment.

There are several adverse features in the regulation methods for electrical heating equipment and in the heating equipment itself which are in use today which detract the use of electrical heating equipment. In particular the convential control by thermostat, in which full heating effect is led to the heating device until the thermostat cuts off the power supply, causes a relatively high rise in surface temperature during the heating period, and, if the the thermostat is covered, can even constitute a fire hazard. In addition the thermostat which is sited with the heating device commonly functions on the basis of a bimetallic cutout and the temperature observed in the vicinity of the heating device and not upon the temperature prevailing in the room space to be heated. Furthermore the bimetal cutouts used make audible sounds when the heating equipment is switched on and also when it is switched off and this cause audible disturbance and uncertainty to the user of the equipment. Further still, the operation of the bimetallic thermostat causes interference in the operation of certain telecommunications equipment such as radio receivers, televisions and so on. In addition to this the bimetallic cutout in the thermostat does not keep to its setting in the passage of time, the cutoff temperature changes which means that it hunts on the measuring scale and the user of the equipment must take this into account by carrying out calibration from time to time with the aid of room temperature measurements.

The purpose of the invention put forward is to eradicate the disadvantges described above and to bring about a new method of regulation and equipment, primarily for governing room-orientated electrical heating equipment,in order that the aforementioned detrimental effects do not occur.

The facts characteristic to the invention are referred to in the Patent Claims section.

The regulation method and equipment according to the invention is based on the regulation of the heating equipment surface temperature so that the surface temperature is keptas low as possible relative to the heating effect required. Further, in accordance with the invention, the surface temperature of the heating equipment is not allowed to rise above the allowed and set maximum value. Furthermore, according to one application of the invention, when the speed of change in room temperature exceeds a certain value, for example as the result of momentary ventilation, the surface temperature is fundamentally held constant for a certain periodand the heating effect of the heating equipmentis only regulated according to the changed room temperature after the period referred to.

A merit of the invention is that the surface temperature of the heating equipment always remains sufficiently low and in every circumstance at a safe level. Overheating of the heating equipment cannot occur and nor does the electrical equipment lead to fire hazard; the surface temperature of the heating equipment is also at a pleasant level from the point of view of the user. Further, in utilising the electronic microprocessor measuring and control system in the heating equipment the regulation is precise and permanent because the regulation is based on the actual temperature prevailing in the room space.

The invention is explained in detail in the following with the aid of performance examples and referring to the accompanying drawings in which

Figs 1 - 2 present in diagammatic form various regulation methods and equipments according to the invention and

Figs 3 - 4 present the regulation circumstances and events and the performance of regulation at various temperature conditions in accordance with room temperature and temperature setting.

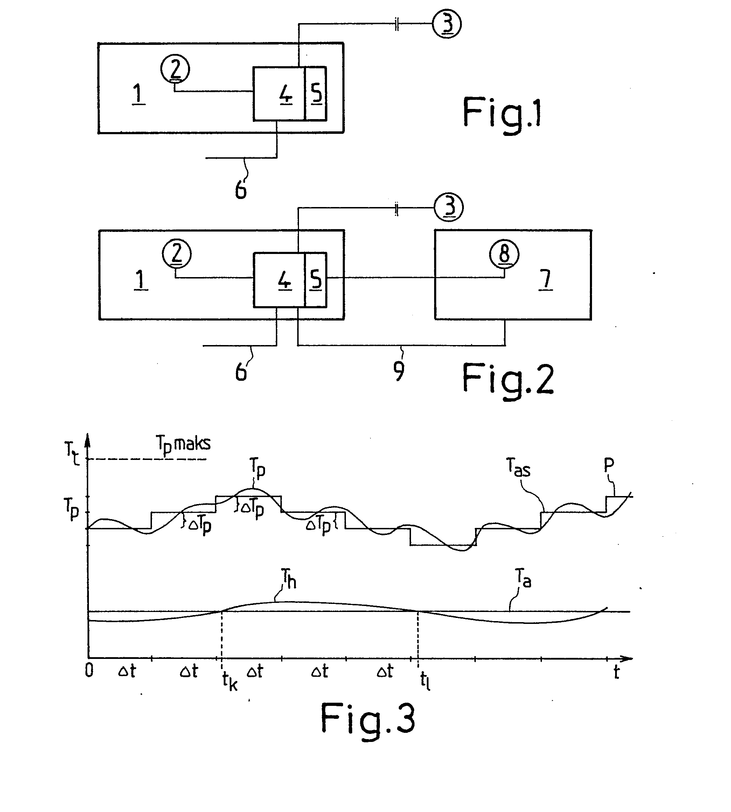

In Fig. 1 the regulation method and equipment in accordance with the invention  for electrical heating device 1 can be seen, as for the regulation of  a   heating radiator mounted to a room space wall. According to the invention the heating device 1 is furnished with a governing device 4  in order to regulate the heating effect of the heating device. The regulating equipment includes           the surface temperature sensor 2 located on the surface of heating device 1, the temperature sensor 3  arranged to measure the temperature of the room space and the governing device 4, such as the microprocessor with its room temperature setting device 5.   The sensor 3 measuring the room temperature is located to advantage  fundamentally in a separate position from the heating device 1 so that it measures particularly the actual room temperature.

In Fig. 3 the operation of the regulating method according to the invention is presented graphically; the vertical axis represents temperature and the horizontal axis time. The straight line $T_a$ represents the desired setting value for room temperature, equivalent to the temperature setting value , for example $21^0C$, at the setting device 5 of the equipment in Fig. 1. The curve $T_h$ depicts the actual value of the room temperature as measured by the room temperature sensor 3 in accordance with Fig. 1. The curve $T_p$ depicts the actual surface temperature of the heating device 1 which is measured with the surface temperature sensor 2 in the equipment according to Fig. 1.  The stepped line $T_{as}$ depicts the setting value of the equipment surface temperature and also the heating effect P.

According to the invention the heating effect P of the heating device 1 is governed according to the room temperature $T_h$ and time t so that when $T_h$ falls below the room temperature setting value $T_a$ (cycle 0 - $t_k$) the surface temperature $T_p$ is raised  to a known extent $\Delta T_p$ for a known time period $\Delta t$, that is  a corres- ponding extra heating effect is supplied to the heating device. Correspondingly when the room temperature $T_h$ exceeds the room temperature setting value  $T_a$ the surface temperature $T_p$ of the heating device is reduced to a known extent $\Delta T_p$ for a known time perion $\Delta t$, for example in Fig. 3 for a time cycle $t_k$ - $t_1$. Thus the desired setting value $T_a$ is attained with as low à surface temperature as possible  and with small changes in surface temperature.

In the regulation method according to the invention in Fig.

3. the control of the effect of the heater is thus performed on the basis of the surface temperature $T_p$.which is governed according to the governing device 4, that is in accordance with the internal temperature setting $T_{as}$ calculated by computer. When the surface temperature $T_p$ exceeds the setting $T_{as}$ the power is cut off ( the descending stages of the steps in the figure); when it falls below the setting the power is reconnected (rising steps). Then $T_p$ and thus also $T_h$ follow the setting $T_{as}$ (bottom part of the figure). When regulation is carried out on a time basis changes are begun from a known surface temperature $T_p$ for example 40°C. The surface temperature $T_p$ of the heater is set with the ON-OFF control to this value. If after a certain period of time $\Delta t$ the room temperature $T_h$ is lower than the room temperature setting $T_a$, the surface temperature setting $T_{as}$ is increased $\Delta T_p$ , but however so that the maximum setting $T_{pmax}$, for example 80°C,is not exceeded. If after the stated time $\Delta t$ the room temperature $T_h$ is higher than the room temperature setting $T_a$ the surface temperature setting $T_{as}$ is lowered, but not however lower than the room temperature setting $T_a$. The time period $\Delta t$ can be regulated correspondingly with the room in question by measuring the time between $t_k - t_l$ of the surface temperature $T_{as}$ maximum and minimum values, when it is some factor of $\Delta t$ if $\Delta t$ is sufficiently short. A measured time is is set for the cycle $\Delta t$ of the room in question or some part of its whole value.

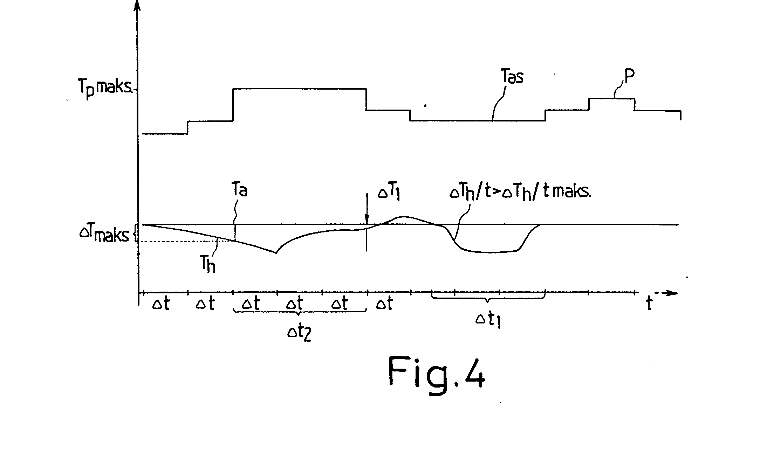

A rapid change in room temperature is an abnormal phenomenon and is eliminated according to the invention by measuring the speed of change $\Delta T_h/t$. If it is greater than the known limiting value $\Delta T_h/t$ max. the surface temperature setting $T_{as}$ is kept essentially constant for a known period $\Delta t_1$, and only after this is regulation of the surface temperature setting begun if required. This is illustrated graphically in Fig. 4.

The room temperature change speed $\Delta T_h/t$ measured as time cycle $\Delta t_1$ is greater than the the known limiting value $\Delta T_h/t$ max. Then during a corresponding time the surface temperature setting $T_{as}$ is kept constant and after the room temperature has returned to a normal level after the time period $\Delta t_1$ it is returned to normal regulation.

If the difference between temperature $T_h$ and setting value $T_a$ exceeds a known value $\Delta Tmax$. and the change mentioned is not too rapid , $\Delta T_h/t$ is smaller than $\Delta T_h/t$ max. normal regulation is overridden and it is transformed to maximum regulation, that is the surface temperature is st to maximum, Fig. 4, cycle $\Delta t_2$ or minimum, room temperature setting. After this upon the room temperature $T_h$ changing a known temperature $\Delta T_1$, for example $1^0C$ above the setting value $T_a$, it is returned to normal regulation operation by allocating the surface temperature setting for example a starting value such as $40^0C$. The device then observes a longer term change in room temperature, for example upon a ventilating window being left open, and adapts the effectiveness of the heating device to correspond to the new circumstance.

The heating effect of the heating equipment is regulated by governing the number of alternating current halfwaves 6 fed to the heating equipment, by means of the regulator 4. The aforementioned halfwaves are passed into the equipment for known time periods, for example from fractions of a second to several seconds, and the halfwaves cut for known time periods, for example fractions of a second to several seconds. The regulation of the surface temperature is then performed by means of ON/OFF regulation and the setting of the internal surface temperature $T_{as}$ fundamentally corresponds to the heating effect P in accordance with Fig. 4.

In Fig. 2 the equipment also includes another heating device 7 with its surface temperature sensor 8. The governing device 4 with its setting facility 5 of the previous heating equipment 1 is arranged to control the second heating equipment 7 surface temperature $T_p$ in the manner described above.

In Figs 1 - 2 the temperature sensors 3 monitor the room temperature and are essentially located separate from the heating equipment 1 so that they measure the actual temperature of the room without any kind of interference. Naturally temperature sensors 3 may also be located in association with the heating equipment or in its immediate vicinity in the convential manner as long as it is ensured that the heating equipment does not interfere with the measurement of the room temperature or that interference caused by the heating equipment is compensated for.

The performance examples are intended for the illustration of the invention without limitation in any respect. The invention can thus be modified within the limits of the accompanying Patent Claims.

PATENT CLAIMS

1. A regulation method for governing the heating effect of an electrical heating device (1) in relation to the heating of room space c h a r a c t e r i s e d in that the heating effect (P) of the heating device (1) is governed in accordance with room temperature ($T_h$) and time (t) so that when the room temperature falls below that of the correspondingly maintained temperature setting value ($T_a$) the surface temperature ($T_p$) of the heating device is raised a calculated known level ($\Delta T_1$) for a known time period ($\Delta t$) after which the regulation cycle is repeated.

2. A method according to Patent Claim 1 c h a r a c - t e r i s e d in that the surface temperature ($T_p$) is not regulated above a a known maximum surface temperature ($T_p$ max.)

3. A method according to Patent Claims 1 and 2 , c h a r a c t e r i s e d in that the speed of change ($T_h/t$) of the room temperature ($T_h$) is measured and upon the speed of change exceeding the known value ($T_h/t$ max.) the surface temperature ($T_{as}$) is essentially held as constant for a known time ($\Delta t_1$) and the heating effect of heating device (1) regulated in accordance with the room temperature only after the aforementioned time period.

4. A method in accordance with Patent Claims 2 and 3 c h a r a c t e r i s e d in that when the speed of change ($T_h/t$) of room temperature ($T_h$) falls below the known value ($T_h/t$ max.) and both the room temperature and the room temperature setting value ($T_a$) exceed the known value ($\Delta T$ max.) the surface temperature ($T_p$) of the heating device is set to the maximum or the corresponding minimum value ($T_p$ max., corresp. $T_p$min.) until the difference between the room temperature and the room temperature setting value reaches a known value ($\Delta T_1$).

5. A method according to one of the Patent Claims 1 - 5 c h a r a c t e r i s e d in that the surface temperature ($T_p$) of the heating device (1) and correspondingly the room temperature ($T_h$) are measured at the heating device surface and correspondingly with the aid if the temperature sensors (2,3) located in the room space separately from the heating device and that the heating effect of the heating device is governed with the aid of the electrical device (4).

6. A method according to one of the Patent Claims 1 - 5 c h a r a c t e r i s e d  in that the heating effect of the heating device (1) is governed by regulating the number of halfwaves of the current (6) to be supplied in time units with the aid of the regulation device (4).

7. Equipment for the realisation of the method in accordance with one of the Patent Claims 1 - 6, c h a r a c t e r - i s e d  in that the equipment includes the surface temperature sensor (2) located at the surface of the heating device (1) a room temperature sensor (3) essentially located separately from heating device and the governing device (4) with its room temperature setting device (5), the sensors of which are arranged to form the electrical signals corresponding to temperatures $(T_p, T_h)$ and the governing device is arranged to control the electrical power supply (6) to the heating device (1) in accordance with the aforementioned temperatures and the desired room temperature $(T_a)$ set at the setting device.

8. Equipment according to Patent Claim 7 c h a r a c t - e r i s e d  in that the equipment also includes a further heating device (7) with its surface temperature sensor (8), and that the governing device (4) is arranged to control the surface temperature $(T_p)$ of the second abovementioned heating device.

9. Equipment in accordance with Patent Claims 7 or 8 c h a r a c t e r i s e d  in that the governing device is arranged to control the heating effect of heating device (1) by regulating the number of current halfwaves to be supplied to the heating device.

Fig.1

Fig.2

Fig.3

Fig.4